(19) **Europäisches Patentamt / European Patent Office / Office européen des brevets**

(11) **EP 2 556 261 B1**

(12) **FASCICULE DE BREVET EUROPEEN**

(45) Date de publication et mention de la délivrance du brevet:
**06.01.2016 Bulletin 2016/01**

(21) Numéro de dépôt: **11718454.9**

(22) Date de dépôt: **05.04.2011**

(51) Int Cl.:
**F04D 29/68** [(2006.01)]

(86) Numéro de dépôt international:
**PCT/FR2011/050762**

(87) Numéro de publication internationale:
**WO 2011/124839 (13.10.2011 Gazette 2011/41)**

(54) **COMPRESSEUR DE MOTEUR, EN PARTICULIER DE TURBOREACTEUR D'AERONEF, MUNI D'UN SYSTEME DE PRELEVEMENT D'AIR**

MOTORVERDICHTER, IM BESONDEREN FÜR EINEN TRIEBWERKVERDICHTER EINES FLUGZEUGES, MIT EINEM ENTLÜFTUNGSSYSTEM

ENGINE COMPRESSOR, PARTICULARLY AIRCRAFT JET ENGINE COMPRESSOR, FITTED WITH AN AIR BLEED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.04.2010 FR 1052634**

(43) Date de publication de la demande:
**13.02.2013 Bulletin 2013/07**

(73) Titulaire: **Snecma**
**75015 Paris (FR)**

(72) Inventeur: **TOUYERAS, Armel**
**F-77380 Combs La Ville (FR)**

(74) Mandataire: **Gevers France**
**41, avenue de Friedland**
**75008 Paris (FR)**

(56) Documents cités:
WO-A1-80/00729   FR-A1- 2 914 705
GB-A- 2 407 142   US-A- 4 155 680

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne le domaine des compresseurs de moteur, et notamment de turboréacteur d'aéronef, qui comprennent un système de prélèvement d'air.

On sait que le système de compression d'un turboréacteur (et le compresseur haute pression en particulier) est l'un des composants les plus critiques du moteur. Le compresseur d'un turboréacteur est composé de plusieurs étages successifs de compression, chaque étage étant composé d'une grille d'aubes mobile (rotor) et d'une grille d'aubes fixe (stator).

Lors du passage dans une grille d'aubes fixe, l'air subit une déviation engendrant une perte de vitesse et une augmentation de la pression. Dans ces conditions, des pertes aérodynamiques par friction, appelées également pertes par diffusion, se produisent. Ces pertes ont pour effet de dégrader les performances du compresseur. A proximité des parois de la veine d'écoulement d'air, ces pertes se combinent avec des pertes par friction le long des parois et forment des écoulements 3D engendrant des pertes supplémentaires élevées.

Par ailleurs, on sait que, dans le cas d'un turboréacteur d'aéronef, de l'air à haute pression est généralement prélevé au sein du compresseur haute pression, principalement pour des besoins de refroidissement ou d'opération de divers systèmes du réacteur ou de l'aéronef.

Par le brevet FR-2 166 494, on connaît une installation à grilles d'aubes, comportant au moins une grille d'aubes, fixe ou mobile, traversée par un écoulement de fluide et constituée par une succession d'aubes portées par au moins une paroi latérale. Chaque passage défini par deux aubes successives et la paroi latérale comporte au moins une ouverture d'aspiration localisée, ménagée dans cette paroi latérale et reliée à des moyens d'aspiration agencés pour que la pression au niveau des ouvertures d'aspiration soit du même ordre de grandeur que la pression statique de l'écoulement local dans le passage considéré. De plus, ce brevet FR-2 166 494 prévoit une paroi perforée disposée dans une ouverture d'aspiration de forme allongée, ménagée en regard d'un passage entre deux aubes fixes successives, dans une paroi du carter de compresseur, qui sert à limiter le débit d'aspiration.

En raison d'une section de passage importante pour obtenir une aspiration suffisante, une telle ouverture d'aspiration présente, généralement, des dimensions importantes par rapport à celles du canal entre deux aubes. Aussi, comme les gradients de pression sont élevés dans ce canal, des recirculations ou éjections locales de fluide se produisent. Ces recirculations qui parasitent l'aspiration interfèrent avec la veine d'air et réduisent les gains du système de prélèvement. Ce système de prélèvement n'est donc pas optimal, ainsi que le moteur correspondant.

Par ailleurs, par le document GB 2 407 142 (état de la technique le plus proche), on connaît un compresseur qui prélève de l'air au niveau des passages entre deux aubes, à travers des ouvertures pratiquées dans une paroi, qui sont discontinues.

La Demanderesse s'est fixé comme objectif de prévoir un compresseur qui permet de limiter la dégradation de performance, associée à des pertes dans les zones de paroi des aubes fixes.

Conformément à l'invention, le compresseur comprenant au moins une grille d'aubes fixe dont les aubes sont montées sur une paroi et forment entre elles des passages d'écoulement d'air, et un système de prélèvement d'air qui prélève de l'air au niveau des passages entre deux aubes, à travers des ouvertures pratiquées dans ladite paroi, lesdites ouvertures étant discontinues et pourvues, chacune, d'une pluralité d'orifices agencés les uns derrière les autres dans le sens d'écoulement de l'air, est caractérisée par le fait que l'orifice amont de chaque ouverture présente une section de surface plus importante que les surfaces des sections des orifices aval de l'ouverture, et en ce que le nombre et la section des orifices aval sont ajustés en fonction d'un débit d'aspiration prédéterminé.

La solution proposée par la présente invention consiste donc à prélever de l'air au niveau des passages entre deux aubes par l'intermédiaire d'une pluralité d'orifices agencés les uns derrière les autres dans le sens d'écoulement de l'air, en lieu et place d'un orifice unique. La répartition de l'aspiration sur plusieurs orifices permet d'aspirer efficacement au niveau de chacun des prélèvements (pas d'inversion de sens de l'air), tout en empêchant la recirculation qui se produirait dans un orifice de prélèvement (ou d'aspiration) unique de grande taille.

La présente invention permet donc de limiter la dégradation de performance du compresseur, associée à des pertes dans les zones de parois des aubes fixes, par un prélèvement d'air à faible quantité de mouvement, judicieusement implanté.

De plus, cette solution permet de prélever le même débit (qui sera par exemple réutilisé au sein du moteur ou acheminé vers l'aéronef) qu'un orifice unique, tout en assurant une réduction des pertes secondaires dans la grille d'aubes.

En outre, l'orifice amont de chaque ouverture qui a pour fonction de prévenir le décollement (par une aspiration située en amont, permettant de supprimer ou tout au moins de retarder l'apparition d'un décollement), présente une section de surface plus importante que les surfaces des sections des orifices aval de l'ouverture. De plus, de manière préférentielle, cet orifice amont est centré par rapport à une position qui est située latéralement à proximité de l'extrados d'une aube, et axialement entre 10 % et 30% de la longueur axiale de l'aube à partir de son extrémité amont.

Par ailleurs, les orifices aval d'une ouverture ont pour fonction de réduire l'intensité du décollement, une fois apparue, en extrayant du fluide à basse énergie.

L'aspiration, ainsi discrétisée en plusieurs orifices et implantée selon certains critères précisés davantage ci-dessous, permet donc le contrôle des décollements dans la grille d'aubes.

Par ailleurs, on notera que le document GB 2 407 142 précité, bien que prévoyant des orifices successifs dans le sens d'écoulement de l'air, n'enseigne pas notamment les caractéristiques différentes conformes à l'invention entre l'orifice amont (de plus grande surface) et les orifices aval (dont le nombre et la taille sont ajustables) pour obtenir les fonctions précitées (prévention du décollement, réduction de l'intensité).

Conformément à une caractéristique de l'invention, le nombre et les surfaces des orifices d'une ouverture dépendent d'un débit d'aspiration prédéterminé (engendré par ledit système de prélèvement d'air). De plus, de préférence, le nombre N des orifices d'une ouverture vérifie la relation suivante :

$$\Delta\text{ß}.(S/C)/(N.D) \le 300$$

dans laquelle :

- $\Delta\text{ß}$ représente la déviation du fluide au passage de la grille d'aubes ;
- $S/C$ représente le pas relatif de la grille d'aubes ; et
- $D$ représente ledit débit d'aspiration prédéterminé.

Dans le cadre de la présente invention, les orifices d'une ouverture de prélèvement d'air sont donc distincts entre eux en terme de fonction et de géométrie.

Par ailleurs, pour améliorer l'aspiration, l'orifice amont d'au moins certaines desdites ouvertures présente, au travers de la paroi, une forme inclinée vers l'aval et/ou une forme profilée.

L'air qui est prélevé sur le compresseur est ensuite réinjecté, de façon usuelle, dans un collecteur pour refroidir ou ventiler le système moteur ou alimenter le système d'air de l'aéronef pourvu dudit moteur. Les caractéristiques du système de prélèvement d'air dépendent de l'architecture et des spécifications générales du moteur.

Par ailleurs, la présente invention concerne également un moteur, notamment un turboréacteur d'aéronef, qui comporte au moins un compresseur tel que précité.

D'autres caractéristiques et avantages apparaîtront à la lecture de la description qui suit, accompagnée des dessins en annexe sur lesquels :

- les figures 1A et 1B représentent de façon schématique une ouverture de prélèvement d'air pratiquée dans une paroi porteuse d'aubes d'un compresseur, respectivement selon l'art antérieur et conformément à la présente invention ;
- la figure 2 montre schématiquement des caractéristiques particulières d'un mode de réalisation préféré de l'invention ; et

- la figure 3 montre schématiquement une réalisation particulière d'un orifice amont d'une ouverture de prélèvement d'air.

La présente invention s'applique à un compresseur 1 d'un moteur, notamment d'un turboréacteur d'aéronef, qui est muni d'un système de prélèvement d'air.

On sait qu'un compresseur d'un turboréacteur est composé de plusieurs étages successifs de compression, chaque étage étant composé d'une grille d'aubes mobile (rotor) et d'une grille d'aubes fixe 2 (stator).

Une grille d'aubes fixe 2 (redresseur) comporte des aubes 3 qui sont montées sur une paroi 4 et qui forment entre elles des passages 5 d'écoulement d'air.

Un compresseur 1 tel que considéré dans la présente invention comporte, de plus, un système de prélèvement d'air usuel (non représenté), qui prélève de l'air au niveau des passages 5 entre deux aubes 3, à travers des ouvertures 6 pratiquées dans ladite paroi 4. Dans un mode de réalisation préféré, une ouverture 6 est prévue dans chaque passage 5 entre deux aubes 3 successives.

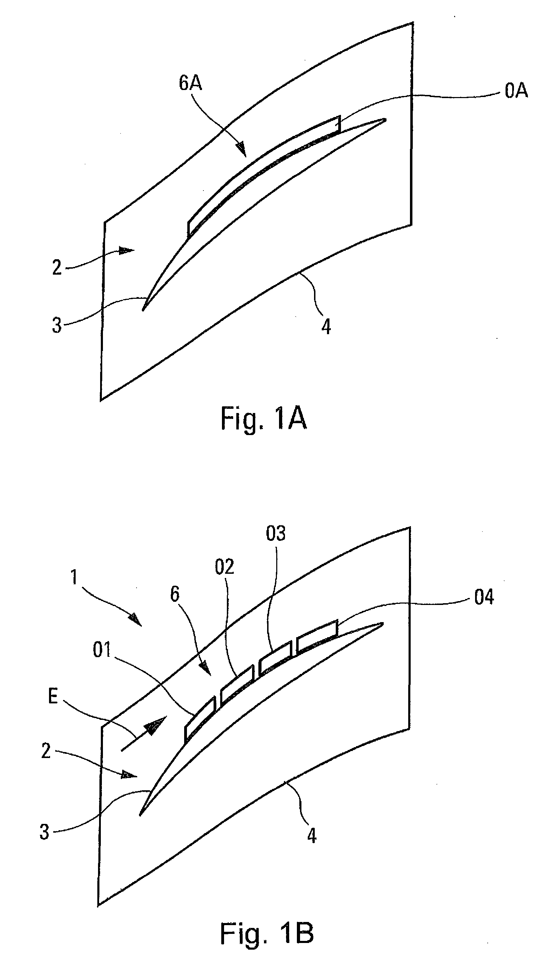

La figure 1A montre schématiquement une ouverture 6A destinée au prélèvement d'air, qui est conforme à l'art antérieur. Cette ouverture 6A comprend un orifice unique OA. Cet orifice unique OA présente une section de passage importante, de sorte que ses dimensions sont importantes par rapport à celles du canal formé par les deux aubes 3, entre lesquelles il est prévu. En raison de ces caractéristiques, il apparaît des recirculations ou éjections locales de fluide, qui parasitent l'aspiration et réduisent les gains du système de prélèvement d'air et les performances du moteur.

Pour remédier à cet inconvénient, le compresseur 1 conforme à l'invention comporte des ouvertures 6 destinées au prélèvement d'air, qui sont discontinues et pourvues, chacune, d'une pluralité d'orifices 01, 02,..., ON agencés les uns derrière les autres dans le sens E d'écoulement de l'air, côté extrados le long d'une aube 3, comme représenté sur la figure 1B (pour laquelle N est égal à 4).

La répartition de l'aspiration sur plusieurs orifices O1 à ON (en lieu et place d'un orifice unique OA) permet de réaliser une aspiration efficace au niveau de chacun des prélèvements (pas d'inversion de sens de l'air), tout en empêchant une recirculation qui se produit dans un orifice de prélèvement unique OA de grande taille.

La présente invention permet donc de limiter la dégradation de performance du compresseur 1, associée à des pertes dans les zones de paroi des aubes 3 d'une grille d'aubes fixe 2, par un prélèvement d'air à faible quantité de mouvement, judicieusement implanté.

De plus, cette solution permet de prélever le même débit (qui sera par exemple réutilisé au sein du moteur ou acheminé vers l'aéronef, dans le cas d'un moteur d'aéronef) qu'un orifice unique OA, tout en assurant une réduction des pertes secondaires dans la grille d'aubes 2.

En outre, l'orifice amont 01 de chaque ouverture 6, dans le sens E d'écoulement de l'air, a pour fonction de prévenir le décollement par une aspiration située en amont, permettant de supprimer ou tout au moins de retarder l'apparition du décollement, et les autres orifices 02 à ON de l'ouverture 6, dits orifices aval, ont pour fonction de réduire l'intensité du décollement, une fois apparue, en extrayant du fluide à basse énergie le long du profil.

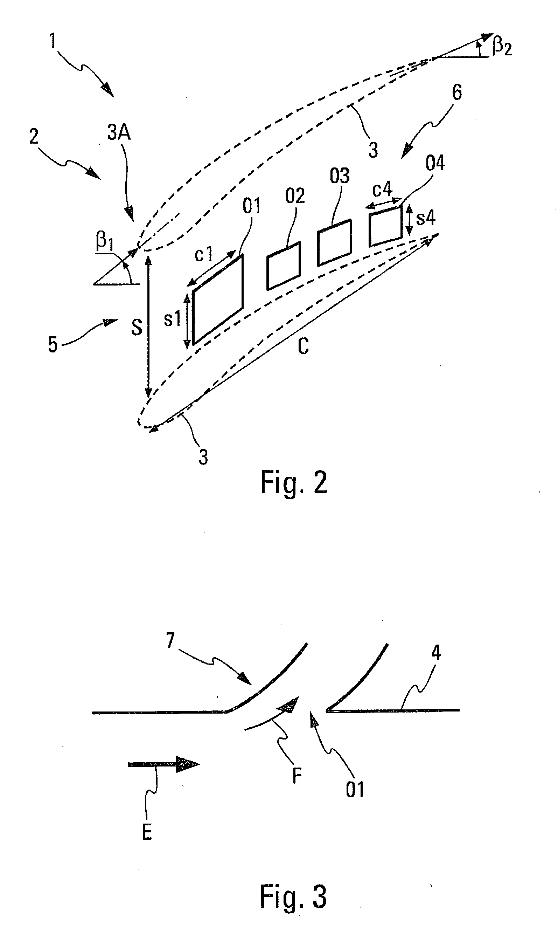

A cet effet, l'orifice amont 01 de chaque ouverture 6 présente, de préférence, une section de surface plus importante que les surfaces des sections des orifices aval 02 à ON de l'ouverture 6, comme représenté sur la figure 2.

De plus, de manière préférentielle, cet orifice amont 01 est centré par rapport à une position qui est située latéralement à proximité de l'extrados d'une aube 3, et axialement (c'est-à-dire selon l'axe du compresseur 1) entre 10 % et 30% de corde axiale de façon à aspirer des points singuliers de l'écoulement (dits foyers du décollement). Cet orifice amont 01 a pour fonction de permettre l'aspiration de la partie de l'écoulement qui est à l'origine du décollement qui se produit en aval (foyer). Pour ces raisons, cet orifice amont 01 présente des caractéristiques propres (position figée en amont, section supérieure aux orifices aval 02 à ON, et prise d'air profilée, comme précisé ci-dessous).

Le débit à assurer est généralement de l'ordre de quelques pour cent selon les spécifications du moteur et la fonction de ventilation assurée par l'air aspirée. A titre d'illustration, on peut prévoir 1% pour assurer une aspiration d'efficacité minimale, et jusqu'à 5 à 6% pour un prélèvement maximal sur le compresseur 1. Le nombre et la section des orifices aval 02 à ON sont ajustés en fonction du débit requis par les fonctions moteur, comme précisé ci-dessous.

La forme et la disposition des orifices 01, 02,..., ON côté extrados le long d'une aube 3, ainsi que le respect de critères de discrétisation sont nécessaires pour garantir la pleine efficacité de la présente invention qui a pour objectif une réduction des pertes aérodynamiques supplémentaires du même ordre de grandeur que la réduction de perte apportée par une fente d'aspiration continue équivalente.

Les orifices 01, 02,..., ON peuvent présenter des sections de diverses formes, en particulier de forme circulaire, rectangulaire ou carrée. Sur l'exemple de la figure 2, pour des orifices de section rectangulaire :

- si représente la largeur de l'orifice d'ordre i ; et
- ci représente la longueur de l'orifice d'ordre i.

En outre, en cas de section circulaire, si =ci = ri, ri représentant le rayon de l'orifice d'ordre i.

Conformément à une caractéristique, le nombre N et les surfaces des orifices 01, 02,..., ON d'une ouverture 6 dépendent d'un débit d'aspiration prédéterminé. De plus, ledit nombre N vérifie, de préférence, la relation suivante :

$$\Delta\beta.(S/C)/(N.D) \leq 300$$

dans laquelle :

- $\Delta\beta$ représente la déviation du fluide au passage de la grille d'aubes 2, $\Delta\beta = \beta2 - \beta1$, $\beta1$ et $\beta2$ étant les angles entre, d'une part l'axe du compresseur 1, et d'autre part la direction générale d'écoulement du fluide, respectivement au niveau de l'extrémité amont 3A et de l'extrémité aval de l'aube 3, comme représenté sur la figure 2 ;
- S/C représente le pas relatif de la grille d'aubes 2, S étant l'écartement entre deux aubes 3 successives et C étant la corde d'une aube 3 ; et
- D représente ledit débit d'aspiration prédéterminé (généralement entre 1% et 5%).

Par ailleurs, dans un mode de réalisation particulier, pour éviter ou réduire les perturbations dans le but d'améliorer l'aspiration, l'orifice amont 01 des ouvertures 6 présente, au travers de la paroi 4, une forme inclinée vers l'aval ou une forme profilée 7 (également inclinée vers l'aval dans le sens E d'écoulement de l'air) telle que représentée sur la figure 3, F illustrant le flux d'air aspiré.

L'air prélevé sur le compresseur 1 est ensuite réinjecté, de façon usuelle, dans un collecteur (non représenté) pour refroidir ou ventiler le système moteur ou alimenter le système d'air de l'aéronef pourvu dudit moteur. Les caractéristiques du système de prélèvement d'air dépendent de l'architecture et des spécifications générales du moteur.

La présente invention peut être implantée au carter ou au moyeu, le cas échéant en suppression d'un étage à calage variable. Elle est applicable à tout type de compresseur (basse pression, haute pression, civil, militaire) et pour tout type d'architecture globale (turboréacteur, turbopropulseur, contrarotatif, fan non caréné dit «open-rotor»).

**Revendications**

1. Compresseur comprenant au moins une grille d'aubes fixe (2) dont les aubes (3) sont montées sur une paroi (4) et forment entre elles des passages (5) d'écoulement d'air, et un système de prélèvement d'air qui prélève de l'air au niveau des passages (5) entre deux aubes (3), à travers des ouvertures (6) pratiquées dans ladite paroi (4), lesdites ouvertures (6) étant discontinues et pourvues, chacune, d'une pluralité d'orifices (01, 02, 03, 04) agencés les uns derrière les autres dans le sens (E) d'écoulement de l'air, **caractérisé en ce que** l'orifice amont (01) de chaque ouverture (6) présente une section de surface plus importante que les surfaces des sections des orifices aval (02, 03, 04) de l'ouverture (6), et **en ce que** le nombre et la section des orifices aval (02, 03, 04) sont ajustés en fonction d'un débit d'aspiration prédéterminé.

2. Compresseur selon la revendication 1, dont l'orifice amont (01) de chaque ouverture (6) est centré par rapport à une position qui est située latéralement à proximité de l'extrados d'une aube (3), et axialement entre 10 % et 30% de la longueur axiale de l'aube (3) à partir de son extrémité amont (3A).

3. Compresseur selon l'une des revendications 1 et 2, dont le nombre et les surfaces des orifices (01, 02, 03, 04) d'une ouverture (6) dépendent d'un débit d'aspiration prédéterminé, engendré par ledit système de prélèvement d'air.

4. Compresseur selon la revendication 3, dont le nombre N des orifices (01, 02, 03, 04) d'une ouverture (6) vérifie la relation suivante :

$$\Delta\text{ß}.(S/C)/(N.D)\leq 300$$

dans laquelle :

- Δß représente la déviation du fluide au passage de la grille d'aubes (2) ;
- S/C représente le pas relatif de la grille d'aubes (2), S étant l'écartement entre deux aubes (3) successives et C étant la corde d'une aube (3) ; et
- D représente ledit débit d'aspiration prédéterminé.

5. Compresseur selon l'une quelconque des revendications précédentes, dont l'orifice amont (01) d'au moins certaines desdites ouvertures (6) présente, au travers de la paroi, une forme inclinée vers l'aval.

6. Compresseur selon l'une quelconque des revendications précédentes, dont l'orifice amont (01) d'au moins certaines desdites ouvertures (6) présente, au travers de la paroi (4), une forme profilée (7).

7. Moteur, en particulier turboréacteur d'aéronef, pourvu au moins d'un compresseur et d'un système de prélèvement d'air, **caractérisé en ce qu'**il comporte un compresseur (1) selon l'une quelconque des revendications 1 à 6.

**Patentansprüche**

1. Kompressor mit zumindest einem feststehenden Schaufelgitter (2), wobei die Schaufeln (3) über einer Wand (4) angebracht sind und zwischen ihnen Durchgänge (5) zur Durchströmung von Luft ausgebildet sind, und einem System zur Entnahme von Luft, welches Luft bei den Durchgängen (5) zwischen den Schaufeln (3) durch Öffnungen (6) entnimmt, die in der Wand (4) ausgebildet sind, wobei die Öffnungen (6) diskontinuierlich sind und mit mehreren Auslässen (01, 02, 03, 04) versehen sind, die hintereinander in der Richtung (E) der Durchströmung von Luft angeordnet sind, **dadurch gekennzeichnet, dass** der Auslass (01) vor jeder Öffnung (6) einen größeren Abschnitt der Oberfläche als die Oberflächen der Abschnitte der Auslässe (02, 03, 04) der Öffnung (6) darstellt, und dass die Anzahl und der Abschnitt der hinteren Auslässe (02, 03, 04) als Funktion der Saugmenge angepasst sind.

2. Kompressor nach Anspruch 1, wobei der Auslass (01) vor jeder Öffnung (6) mit Bezug auf eine Position zentriert ist, die sich seitlich in Nähe des Gewölberückens einer Schaufel (3) und axial zwischen 10 und 30 % der axialen Länge der Schaufel (3) ausgehend von dem vorderen Ende (3A) befindet.

3. Kompressor nach einem der Ansprüche 1 und 2, wobei die Anzahl und die Oberflächen der Auslässe (01, 02, 03, 04) von einer Öffnung (6) von einer vorbestimmten Saugmenge abhängen, die von dem System zur Entnahme von Luft erzeugt wird.

4. Kompressor nach Anspruch 3, wobei die Anzahl N der Auslässe (01, 02, 03, 04) einer Öffnung (6) die folgende Beziehung erfüllt:

$$\Delta\beta . (S/C)/ (N.D) \leq 300$$

wobei:

- Δβ eine Ablenkung der Flüssigkeit beim Durchgang durch das Schaufelgitter (2) darstellt;
- S/C den relativen Schritt des Schaufelgitters (2) darstellt, wobei S ein Abstand zwischen zwei aufeinanderfolgenden Schaufeln (3) ist, und C die Sehnenlänge einer Schaufel (3) ist; und
- D die vorbestimmte Saugmenge darstellt.

5. Kompressor nach einem der vorhergehenden Ansprüche, wobei der Auslass (O1) vor zumindest bestimmten dieser Öffnungen (6) durch die Wand eine nach hinten geneigte Form aufweist.

6. Kompressor nach einem der vorhergehenden Ansprüche, wobei der Auslass (O1) vor zumindest bestimmten dieser Öffnungen (6) durch die Wand (4) eine profilierte Form (7) aufweist.

7. Motor, insbesondere Turboreaktor für ein Flugzeug, welcher zumindest mit einem Kompressor und einem System zur Entnahme von Luft versehen ist, **dadurch gekennzeichnet, dass** er einen Kompressor (1) nach einem der Ansprüche 1 bis 6 aufweist.

**Claims**

1. A compressor comprising at least one fixed cascade of vanes (2), the vanes (3) of which are mounted on a wall (4) and between them form airflow passages (5), and an air bleed system, which bleeds air from the passages (5) between two vanes (3) through openings (6) made in said wall (4), said openings (6) being discontinuous and each provided with a plurality of orifices (01, 02, 03, 04) arranged one behind the other in the direction (E) of the airflow, **characterized in that** the upstream orifice (O1) of each opening (6) has a cross-sectional area larger than the areas of the cross sections of the downstream orifices (02, 03, 04) of the opening (6), and **in that** the number and cross sections of the downstream orifices (02, 03, 04) are adjusted to suit a predetermined bleed-off suction flow.

2. The compressor as claimed in claim 1, in which the upstream orifice (O1) of each opening (6) is centered in relation to a position situated laterally near the suction side of a vane (3) and axially at between 10% and 30% of the axial length of the vane (3) from its upstream extremity (3A).

3. The compressor as claimed in one of claims 1 and 2, in which the number and cross sections of the orifices (01, 02, 03, 04) of an opening (6) depend on a predetermined suction flow generated by said air bleed system.

4. The compressor as claimed in claim 3, in which the number N of orifices (01, 02, 03, 04) of an opening (6) satisfies the following relation:

$$\Delta\beta.(S/C)/(N.D) \leq 300$$

in which:

- $\Delta\beta$ represents the deviation of the fluid on passage through the cascade of vanes (2);
- S/C represents the relative pitch of the cascade of vanes (2), where S is the distance between two successive vanes (3) and C is the chord of a vane (3); and
- D represents said predetermined suction flow.

5. The compressor as claimed in any one of the preceding claims, in which the upstream orifice (O1) of at least some of said openings (6) exhibits, through the wall, a shape slanting in a downstream direction.

6. The compressor as claimed in any one of the preceding claims, in which the upstream orifice (O1) of at least some of said openings (6) exhibits, through the wall (4), a streamlined shape (7).

7. Engine, particularly an aircraft jet engine, fitted with at least one compressor and with an air bleed system, **characterized in that** it incorporates a compressor (1) as claimed in any one of claims 1 to 6.

Fig. 1A

Fig. 1B

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2166494
- GB 2407142 A